# EUROPÄISCHE PATENTANMELDUNG

(11) **EP 2 429 001 A2**
(43) Veröffentlichungstag der Anmeldung: **14.03.2012**
(21) Anmeldenummer: 11006898.8
(22) Anmeldetag: 24.08.2011
(51) Int. Cl.: H01L 31/048

(54) **Anschlussdose für Solarmodul**

(30) Priorität: 09.09.2010 DE 102010044872
(71) Anmelder: Lumberg Connect GmbH, 58579 Schalksmühle (DE)
(72) Erfinder: Limberg, Dirk, 58791 Werdohl (DE)
(74) Vertreter: Ostriga, Sonnet, Wirths & Roche

(57) **Zusammenfassung**

Beschrieben und dargestellt ist eine Anschlussdose (10) für ein Solarmodul, mit einem Gehäuse (11), welches einen Innenraum (12) ausbildet, innerhalb dessen ein Ende einer Anschlussleitung (15) zum Abführen erzeugter Elektrizität einliegt, die mit einem Modulkontakt und einer Bypassdiode (13) elektrisch verbunden ist, wobei das die Ader (18) des innerhalb des Gehäuses einliegenden Endes der Anschlussleitung mit einer Aderendhülse (19) versehen ist, an welcher ein Kontaktbein (14) der Bypassdiode unmittelbar angeordnet ist.

## Beschreibung

Die Erfindung betrifft eine Anschlussdose für ein Solarmodul, mit einem Gehäuse, welches einen Innenraum ausbildet, innerhalb dessen ein Ende einer Anschlussleitung zum Abführen erzeugter Elektrizität einliegt, welches mit einem Modulkontakt und einer Bypassdiode elektrisch verbunden ist.

Aus dem Stand der Technik ist durch DE 10 2008 022 049 eine Anschlussdose bekannt geworden, die in vorteilhafter Weise eine Bypassdiode im Deckel einer Anschlussdose anordnet. Über metallene Kontaktglieder wird die Bypassdiode beim Aufsetzen des Deckels auf die Anschlussdose unter gleichzeitiger Festlegung der Modulkontakte an dem innerhalb der Anschlussdose einliegenden Ende der Anschlussleitung elektrisch verbunden.

Diese spezielle Ausführungsform einer Anschlussdose, bei welcher die sogenannten Funktionsbauteile, wie Bypassdioden, im Deckel angeordnet sind und durch Aufsetzen des Deckels auf die Anschlussdose mit den stromführenden Teilen kontaktiert werden, ist für bestimmte Problemstellungen ausgesprochen vorteilhaft.

Es hat sich jedoch herausgestellt, dass gewisse Produktionsvorgänge bei der Herstellung von Solarmodulen eine noch effizientere Fertigung auch der Anschlussdose ermöglichen bzw. erfordern.

Bei der vollautomatischen Herstellung von Solarmodulen wird die Anschlussdose vermehrt durch Zulieferer, komplett vormontiert angeliefert. Solche vormonierten Einheiten werden in Magazinen an die Fertigungsstraßen geliefert. Die Anschlussdosen werden dort von Montagerobotern entnommen und auf dem Solarmodul befestigt.

Insofern ist es Aufgabe der Erfindung eine vorkonfektionierte Anschlussdose zu schaffen, deren Herstellung mit einem Minimum an Aufwand erfolgen kann.

Gelöst wird die Aufgabe von einer Anschlussdose mit den Merkmalen des Anspruches 1, insbesondere mit den kennzeichnenden Merkmalen, wonach die Ader des innerhalb des Gehäuses einliegenden Endes der Anschlussleitung mit einer Aderendhülse versehen ist, an welcher ein Kontaktbein der Bypassdiode unmittelbar angeordnet ist.

Der wesentliche Vorteil, die Bypassdiode unmittelbar an der Anschlussleitung bzw. an der die Anschlussleitung umgebenden Aderendhülse anzubringen, liegt im Wesentlichen in der Vereinfachung der Montage. Die Anzahl der Montageschritte und des eingesetzten Materials reduziert sich im Gegensatz zum Stand der Technik erheblich. Insofern wird die Produktion effektiver gestaltet und es lassen sich Kostenersparnisse realisieren.

Bei einer Ausführungsform ist vorgesehen, dass die Aderendhülse eine Zunge zur Aufnahme des Kontaktbeins der Bypassdiode ausbildet.

Die von der Aderendhülse ausgebildete Zunge erleichtert die automatisierte Montage insofern, als das Kontaktbein der Bypassdiode in einem ersten Schritt auf die Zunge aufgelegt wird und insoweit einen Montagevorkontakt mit der Aderendhülse eingeht. Die Zunge erleichtert insofern das anschließende Verlöten, Verschweißen oder Verkleben.

Die vorbeschriebene Ausführungsform lässt sich weiter verfeinern, indem die Zunge an einem freien Ende der Aderendhülse angeordnet und schalenartig ausgeformt ist.

Die schalenartige Ausformung der Zunge gewährleistet, dass das Kontaktbein der Bypassdiode vergleichsweise lagestabil an der Aderendhülse anliegt.

Eine bevorzugte Ausführungsform kennzeichnet sich dadurch, dass die Aderendhülse mit einer Nut zur Aufnahme des Kontaktbeins der Bypassdiode versehen ist. Dabei ist es besonderes bevorzugt, wenn die Nut als vollumfänglich umlaufende Kehlnut ausgebildet ist.

Insbesondere das Einbringen einer umlaufenden Kehlnut hat produktionstechnisch wesentliche Vorteile. Muss bei der vorhergehenden Ausführungsform mit einer Zunge die Aderendhülse in einer bestimmten Lage innerhalb der Anschlussdose angeordnet sein, damit die Kontaktbeine der Bypassdiode vollflächig und sicher auf der Zunge der Aderendhülse aufliegen, kann bei der Ausführungsform mit Kehlnut das Kontaktbein der Bypassdiode unabhängig von der Ausrichtung der Aderendhülse immer korrekt in der Kehlnut einliegen. Eine Justage der Aderendhülse durch Drehen der Anschlussleitung um ihre Längsachse für eine korrekte Montageposition ist insofern nicht notwendig.

Es ist vorgesehen, dass das Gehäuse der Anschlussdose eine Auflage für die Bypassdiode und/oder die Aderendhülse aufweist.

Dabei ist insbesondere bevorzugt, dass die Auflage mechanische Haltemittel für die Bypassdiode und/oder die Aderendhülse aufweist.

Beide vorgenannte Ausführungsformen erlauben es in vorteilhafter Weise die Anschlussleitung mit der Aderendhülse durch Montagewerkzeuge lagestabil in der Anschlussdose anzuordnen. Selbiges gilt auch für eine lagestabile Anordnung der Bypassdiode in der Anschlussdose. Die Befestigung der des Kontaktbeins an der Aderendhülse kann in einem zweiten Arbeitsschritt erfolgen.

Die erfindungsgemäße Aufgabe wird ebenso von einer Anschlussdose mit den Merkmalen des Anspruches 8 erfüllt. Weitere vorteilhafte Ausführungsformen sind in den nachfolgenden Ansprüchen 9 und 10 niedergelegt.

Der wesentliche Vorteil in der alternativen Lösung gemäß Anspruch 8 liegt daran, dass man auf die Montage einer Aderendhülse an der Anschlussleitung verzichten kann. Je nach gewünschter Ausführungsform wird die Zunge bzw. die Kehlnut unmittelbar in die Ader der Anschlussleitung eingeformt.

Eine eventuell zur Formstabilisierung eingesetzte Verzinnung kann gleichzeitig für eine Lötverbindung von Kontaktbein und Anschlussleitung genutzt werden.

Im Folgenden wird die Erfindung an Hand von Ausführungsbeispielen erläutert. Es zeigen:
- Fig. 1: Ansicht von oben auf eine erste Ausführungsform der erfindungsgemäßen Anschlussdose,
- Fig. 2: die Anschlussdose gemäß Figur 1 in perspektivischer Ansicht,
- Fig. 3: dass in einer Anschlussdose gemäß Figuren 1 und 2 einliegende Ende eines Anschlusskabels,
- Fig. 4: eine Ansicht von oben auf eine Anschlussdose gemäß Erfindung in einer zweiten Ausführungsform,
- Fig. 5: eine perspektivische Ansicht der Anschlussdose gemäß Figur 4
- Fig. 6: ein in der Anschlussdose gemäß Figur 4 und 5 einliegendes Ende eines Anschlusskabels.

In den Figuren ist eine Anschlussdose insgesamt mit der Bezugziffer 10 versehen.

Die Anschlussdose 10 umfasst ein Gehäuse 11, welches einen Innenraum 12 ausbildet.

Innerhalb des Innenraumes 12 sind Funktionsbauteile, wie beispielsweise die dargestellte Bypassdiode 13 angeordnet, welche zwei Kontaktbeine 14 aufweist.

Von außen in den Innenraum 12 sind Anschlussleitungen 15 eingeführt, die über Sicherungsbügel 16 an der Anschlussdose 10 gehalten sind. Das in der Anschlussdose einliegende Ende der Anschlussleitung 15 ist von seiner Isolierumhüllung 17 befreit, so dass die Ader 18 mit einer Aderendhülse 19 versehen ist. Die Kontaktbeine 14 der Bypassdiode 13 sind unmittelbar an jeweils einer Aderendhülse 19 der Anschlussleitung 15 angeordnet und durch beispielsweise Löten, Schweißen oder Kleben gesichert.

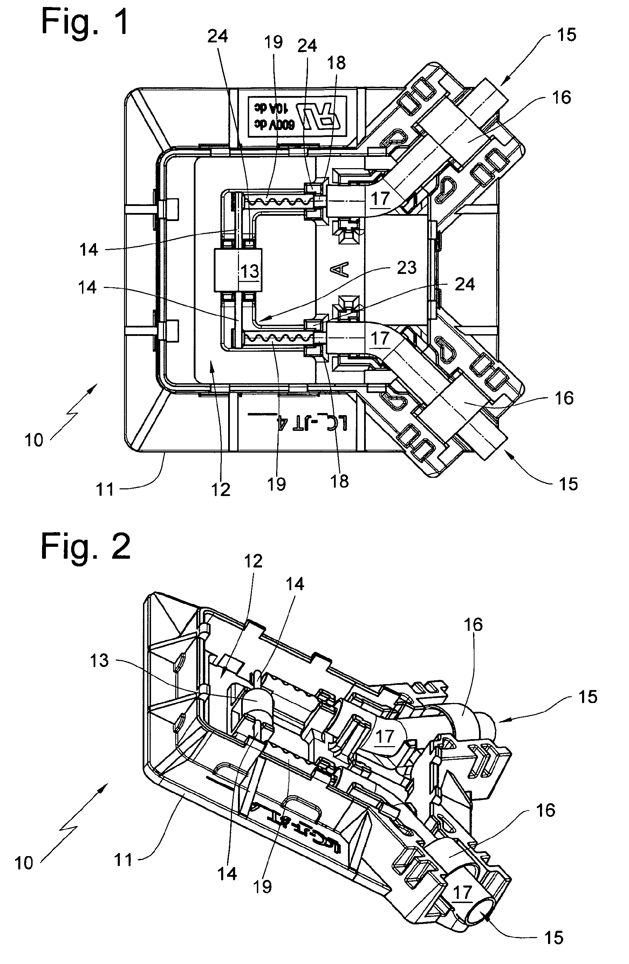

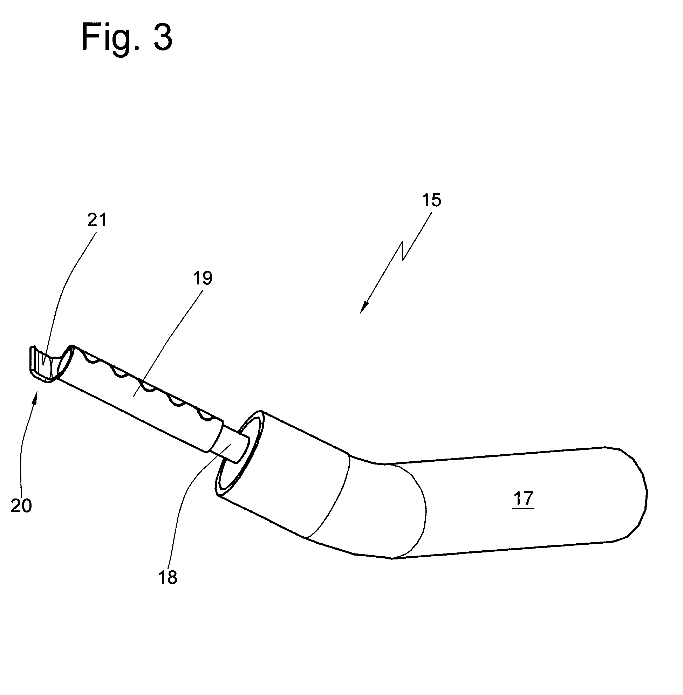

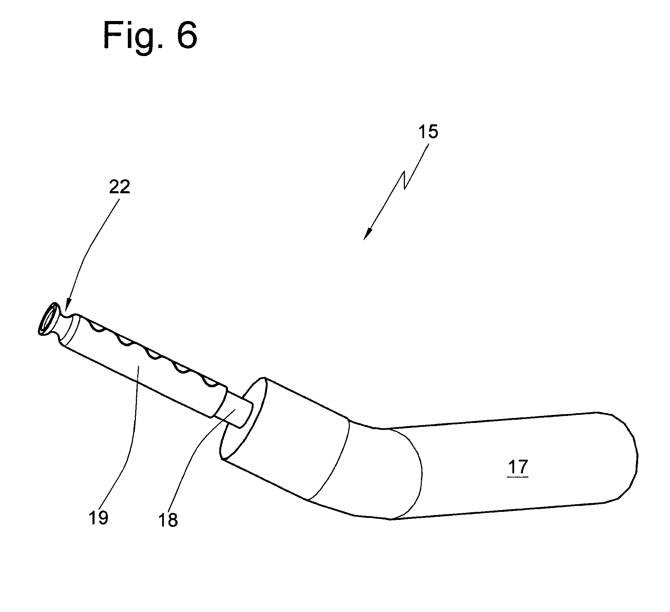

In den Figuren 3 und 6 ist jeweils das in der Anschlussdose 10 gemäß der Figuren 1 und 2 bzw. 4 und 5 einliegende Ende einer Anschlussleitung 15 alleine dargestellt. Die Ader 18 ist von einer Isolierumhüllung 17 umgeben, die zum Freilegen der Ader 18 am freien Ende der Anschlussleitung 15 entfernt wurde. Der freigelegte Abschnitt der Ader 18 ist jeweils von einer Aderendhülse 19 umgeben. Diese ist auf die Ader 18 bevorzugt aufgecrimpt.

Die Aderendhülse 19 in Figur 3 weist eine Zunge 20 auf, die in etwa schalenförmig geformt ist und zwar unter Einhaltung eines gewissen Biegeradius. Wie in Zusammenschau mit den Figuren 1 und 2 zu sehen ist, liegt das jeweilige Kontaktbein der Bypassdiode 13 auf der Zunge 20 auf. Hierzu ist es notwendig, dass die Auflagefläche 21 der Zunge 20 im Wesentlichen parallel zum Kontaktbein 14 ausgerichtet ist. Die Anschlussleitung 17 ist insofern beim Einlegen in die Anschlussdose 10 um ihre Längsachse nicht frei drehbar sondern muss in einer definierten Lage angeordnet sein.

Der wesentliche Vorteil der Zunge 20 ist ihre vergleichsweise große Auflagefläche 21, die sich sehr gut zum Befestigen der Kontaktbeine 14 eignet und eine ausreichende Kontaktfläche für einen guten elektrischen Übergang von Bypassdiode 13 zu Anschlussleitung 15 gewährleistet.

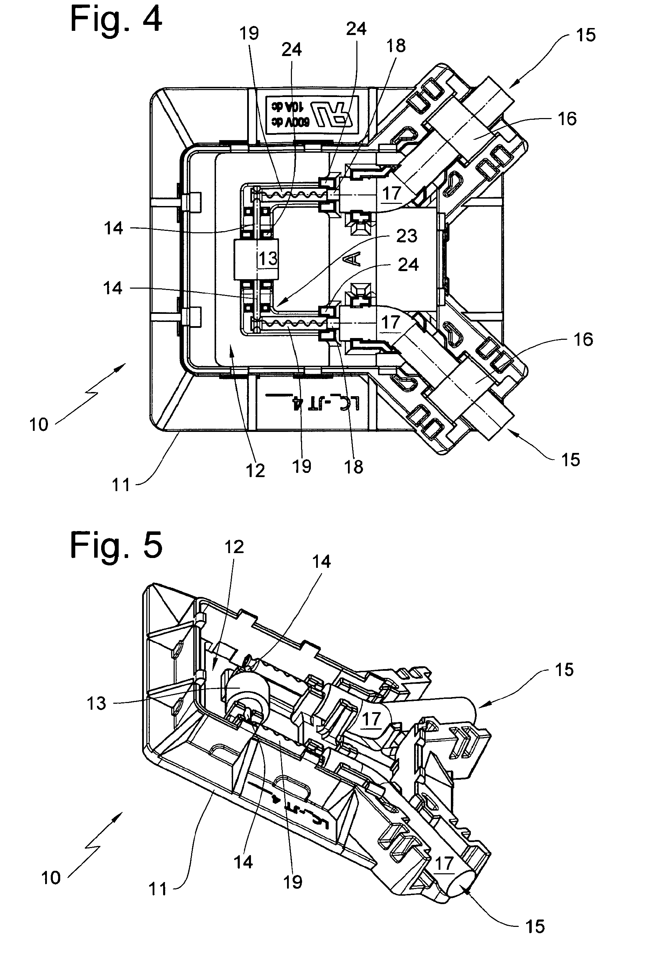

Die Aderendhülse 19 in Figur 6 weist in Abweichung von der Darstellung in Figur 3 an ihrem freien Ende eine umlaufende Kehlnut 22 auf. In den Darstellungen der Figuren 4 und 5 liegt in Abweichung der Darstellung in Figur 1 und 2 die Aderendhülse auf dem Kontaktbein 14 der Bypassdiode 13 auf. Es ist jedoch ohne weiteres verständlich, dass auch umgekehrt die Kontaktbeine 14 auf der Aderendhülse 19 in der Kehlnut 22 aufliegen könnten. Aufgrund der Rotationssymmetrie der Kehlnut 22 ist auf eine bestimmte Rotationsausrichtung der Anschlussleitung 15 nicht zu achten. Egal wie die Anschlussleitung 15 um ihre Längsachse gedreht wird, die Kontaktfläche zwischen Kehlnut 22 der Aderendhülse 19 und dem Kontaktbein 14 der Bypassdiode 13 ist gegeben. Dies hat wesentliche Vorteile für den Produktionsprozess, da auf eine spezielle Ausrichtung der Aderendhülse 19 nicht geachtet werden muss.

Die gegenüber der Zunge 20 geringere Auflagefläche der Kehlnut 22 wird durch die Befestigung von Kontaktbein 14 und Aderendhülse 19 mittels eines geeigneten, elektrisch leitfähigen Materials, beispielsweise durch Lötzinn, ausgeglichen.

Von Vorteil ist weiterhin die Auflage 23, die der Stützung der Aderendhülsen 19 und der Bypassdiode 13 dient. Sie stabilisiert für den Montageprozess die Bypassdiode 13 und die Aderendhülsen 19 und ist darüber hinaus mit mechanischen Haltemitteln 24 versehen.

Bevorzugt durch Klemmung nehmen paarweise angeordnete Halterungen 24 jeweils Aderendhülse 19 und Ader 18 zwischen sich auf und halten so das freie Ende der Anschlussleitung 15 in einer definierten Montageposition. Die Bypassdiode 13 wird durch paarweise angeordnete Haltemittel 24 gehalten, die die Kontaktbeine 14 zwischen sich aufnehmen. Die Auflage 23 ist Teil des Gehäuses 11.

Nicht dargestellt ist die Ausführungsform der Erfindung, bei welcher die Kontaktbeine 14 der Bypassdiode 13 unmittelbar an der Ader 18 der Anschlussleitung 15 angebracht sind.

Hierzu ist es vorteilhaft, die Ader 18 selbst analog zur Ausführungsform der Figuren 1 bis 3 mit einer Zunge durch Verformen der Ader 18 zu versehen. Alternativ kann die Ader 18 auch mit einer umlaufenden Kehlnut analog zu den Figuren 4 bis 6 versehen sein, ebenfalls erreicht durch eine entsprechende Verformung. Diese Ausführungsform erspart das Anbringen der Aderendhülse 19. Sie lässt sich sowohl bei einteiligen Adern 18 aus Vollmaterial anwenden, wie auch bei Adern 18, die aus mehreren Litzen bestehen. Bei Letzteren ist es von Vorteil, wenn die entsprechend verformte Ader 18 durch Verzinnen mechanisch stabilisiert ist.

Eine Anschlussdose nach Anspruch 9 kann dadurch gekennzeichnet sein, dass die Zunge schalenartig geformt ist.

Eine Anschlussdose nach Anspruch 12 kann dadurch gekennzeichnet sein, dass die Nut als vollumfänglich umlaufende Kehlnut ausgebildet ist.

Eine Anschlussdose nach einem der Ansprüche 8 bis 12 kann dadurch gekennzeichnet sein, dass bei einer aus mehreren Litzen bestehenden Ader 18 die Einformung von Zunge oder Nut durch Verzinnen der Ader stabilisiert ist.

### Bezugszeichenliste:

- 10: Anschlussdose
- 11: Gehäuse
- 12: Innenraum
- 13: Bypassdiode
- 14: Kontaktbein
- 15: Anschlussleitung
- 16: Sicherungsbügel
- 17: Isolierumhüllung
- 18: Ader
- 19: Aderendhülse
- 20: Zunge
- 21: Auflagefläche
- 22: Kehlnut
- 23: Auflage
- 24: mechanische Haltemittel

## Patentansprüche

1. Anschlussdose (10 für ein Solarmodul, mit einem Gehäuse (11), welches einen Innenraum (12) ausbildet, innerhalb dessen ein Ende einer Anschlussleitung (15) zum Abführen erzeugter Elektrizität einliegt, welches mit einem Modulkontakt und einer Bypassdiode (13) elektrisch verbunden ist, **dadurch gekennzeichnet, dass** das die Ader (18) des innerhalb des Gehäuses (11) einliegenden Endes der Anschlussleitung (15) mit einer Aderendhülse (19) versehen ist, an welcher ein Kontaktbein (14) der Bypassdiode (13) unmittelbar angeordnet ist.

2. Anschlussdose nach Anspruch 1, **dadurch gekennzeichnet, dass** die Aderendhülse (19) eine Zunge (20) zur Aufnahme des Kontaktbeins (14) der Bypassdiode (13) ausbildet.

3. Anschlussdose nach Anspruch 2, **dadurch gekennzeichnet, dass** die Zunge (20) an einem freien Ende der Aderendhülse (19) angeordnet und schalenartig ausgeformt ist.

4. Anschlussdose nach Anspruch 1, **dadurch gekennzeichnet, dass** die Aderendhülse (19) mit einer Nut zur Aufnahme des Kontaktbeins (14) der Bypassdiode (13) versehen ist.

5. Anschlussdose nach Anspruch 4, **dadurch gekennzeichnet, dass** die Nut als vollumfänglich umlaufende Kehlnut (22) ausgebildet ist.

6. Anschlussdose nach einem der vorhergehenden Ansprüche, **dadurch gekennzeichnet, dass** das Gehäuse (11) der Anschlussdose (10) eine Auflage (23) für die Bypassdiode (13) und/oder die Aderendhülse (19) aufweist.

7. Anschlussdose nach Anspruch 7, **dadurch gekennzeichnet, dass** die Auflage (23) mechanische Haltemittel (24) für die Bypassdiode (13) und/oder die Aderendhülse (19) aufweist.

8. Anschlussdose (10) gemäß Oberbegriff des Anspruches 1, **dadurch gekennzeichnet, dass** ein Kontaktbein (14) der Bypassdiode (13) unmittelbar an der Ader (18) der Anschlussleitung (15) angebunden ist.

9. Anschlussdose nach Anspruch 9, **dadurch gekennzeichnet, dass** das freie Ende der Ader (18) als Zunge zur Aufnahme des Kontaktbeins (14) der Bypassdiode (13) ausgeformt ist.

10. Anschlussdose nach Anspruch 8, **dadurch gekennzeichnet, dass** das in das freie Ende der Ader (18) eine Nut zur Aufnahme des Kontaktbeins (14) der Bypassdiode (13) eingeformt ist.
